# EUROPÄISCHE PATENTANMELDUNG

(11) **EP 3 244 091 A1**
(43) Veröffentlichungstag der Anmeldung: **15.11.2017**
(21) Anmeldenummer: 17401047.0
(22) Anmeldetag: 02.05.2017
(51) Int. Cl.: F16F 15/134, F16F 15/14

(54) **DREHSCHWINGUNGSDÄMPFER, INSBESONDERE FÜR EINEN DREHMOMENTWANDLER UND DREHMOMENTWANDLER MIT DIESEM**

(30) Priorität: 13.05.2016 DE 102016208260
(71) Anmelder: Schaeffler Technologies AG & Co. KG, 91074 Herzogenaurach (DE)
(72) Erfinder: Maienschein, Stephan, 76534 Baden-Baden (DE)

(57) **Zusammenfassung**

Die Erfindung betrifft einen Drehschwingungsdämpfer (5), insbesondere für einen Drehmomentwandler (1), mit um eine Drehachse (d) verdrehbar und relativ gegeneinander um die Drehachse (d) verdrehbaren Dämpferteilen, nämlich einem Eingangsteil (9), einem Ausgangsteil (11) und einem im Drehmomentfluss zwischen diesen wirksam angeordneten Zwischenflansch (10), wobei zwischen Eingangsteil (9) und Zwischenflansch (10) eine erste Federeinrichtung (12) und zwischen Zwischenflansch (10) und Ausgangsteil (11) eine zweite Federeinrichtung (14) mit im Wesentlichen auf demselben Durchmesser angeordneten ersten und zweiten Federelementen (13, 15) vorgesehen ist, und einen Drehmomentwandler (1) mit diesem. Um die Wirkung des Drehschwingungsdämpfers (5) zu verbessern, ist ein Verhältnis der Steifigkeiten oder der Federkräfte oder von einem Wirkradius und den Federkräften der Federelemente (13, 15) gebildeten Federmomente der ersten Federelemente (13) zu den zweiten Federelementen (15) in einem vorgegebenen Bereich um 1 vorgesehen.

## Beschreibung

Die Erfindung betrifft einen Drehschwingungsdämpfer, insbesondere für einen Drehmomentwandler, mit um eine Drehachse verdrehbar und relativ gegeneinander um die Drehachse verdrehbaren Dämpferteilen, nämlich einem Eingangsteil, einem Ausgangsteil und einem im Drehmomentfluss zwischen diesen wirksam angeordneten Zwischenflansch, wobei zwischen Eingangsteil und Zwischenflansch eine erste Federeinrichtung und zwischen Zwischenflansch und Ausgangsteil eine zweite Federeinrichtung mit im Wesentlichen auf demselben Durchmesser angeordneten ersten und zweiten Federelementen vorgesehen ist, und einen Drehmomentwandler mit diesem. Gattungsgemäße Drehschwingungsdämpfer dienen der Drehschwingungsisolation in Antriebssträngen von Kraftfahrzeugen mit einer drehschwingungsbehafteten Brennkraftmaschine. Die Drehschwingungsdämpfer können direkt mit der Kurbelwelle der Brennkraftmaschine, beispielsweise als Zweimassenschwungräder ausgebildet oder in Einmassenschwungräder, Kupplungsscheiben von Reibungskupplungen, Doppelkupplungen, Drehmomentwandler oder dergleichen integriert sein. Hierzu sind beispielsweise aus den Dokumenten DE 10 2010 014 674 A1, DE 10 2010 035 124 A1, DE 10 2009 052 202 A1 und EP 2 711 576 A1 Drehschwingungsdämpfer bekannt, die ein Eingangsteil und ein Ausgangsteil aufweisen, wobei zwischen diesen eine mehrstufige Federeinrichtung mit zwei Dämpferstufen vorgesehen ist. Die Federelemente der Federeinrichtung sind dabei im Wesentlichen auf demselben Wirkradius beziehungsweise Durchmesser angeordnet. Um zwei sich diskret voneinander unterscheidende Dämpferstufen zu erzielen, unterscheiden sich die Federelemente der beiden Dämpferstufen wesentlich voneinander.

Aufgabe der Erfindung ist die Weiterbildung eines gattungsgemäßen Drehschwingungsdämpfers und eines hydrodynamischen Drehmomentwandlers mit diesem. Insbesondere ist Aufgabe der Erfindung, einen Drehschwingungsdämpfer und einen Drehmomentwandler mit diesem vorzuschlagen, bei dem zwei Dämpferstufen ähnlich oder gleich sind.

Die Aufgabe wird durch den Gegenstand des Anspruchs 1 gelöst. Die von dem Anspruch 1 abhängigen Ansprüche geben vorteilhafte Ausführungsformen des Gegenstands des Anspruchs 1 wieder.

Der vorgeschlagene Drehschwingungsdämpfer dient der Drehschwingungsisolation von Drehschwingungen in einem Antriebsstrang eines Kraftfahrzeugs insbesondere zur Drehschwingungsisolation von Drehschwingungen einer Brennkraftmaschine und ist insbesondere für einen hydrodynamischen Drehmomentwandler vorgesehen. Der Drehschwingungsdämpfer enthält zwei um eine Drehachse verdrehbar und relativ gegeneinander um die Drehachse verdrehbare Dämpferteile, nämlich ein Eingangsteil, ein Ausgangsteil und einen im Drehmomentfluss zwischen diesen wirksam angeordneten Zwischenflansch. Zur Ausbildung einer drehschwingungsdämpfenden Wirkung sind zwischen Eingangsteil und Zwischenflansch eine erste Federeinrichtung und zwischen Zwischenflansch und Ausgangsteil eine zweite Federeinrichtung mit im Wesentlichen auf demselben Durchmesser beziehungsweise Wirkradius erste und zweite Federelemente, beispielsweise gerade und/oder auf ihren Einsatzdurchmesser vorgebogene Schraubendruckfedern, vorgesehen. Zur Ausbildung einer lediglich einstufigen oder einer lediglich geringfügig zweistufig ausgebildeten Dämpfung des Drehschwingungsdämpfers mittels zweier durch einen Zwischenflansch getrennter Federeinrichtungen ist ein Verhältnis der Steifigkeiten und/oder der Federkräfte und/oder der von einem Wirkradius und den Federkräften der Federelemente abhängigen Federmomente der ersten Federelemente zu den zweiten Federelementen in einem vorgegebenen Bereich um 1 vorgesehen. Beispielsweise können derartige Bereiche zwischen 0,5 und 2,0, bevorzugt zwischen 0,8 und 1,6 und besonders bevorzugt zwischen 0,9 und 1,1 vorgesehen sein. Hierzu können die Federelemente der beiden Federeinrichtungen bezüglich ihrer Materialeigenschaften und/oder Geometrie gleich oder unterschiedlich ausgebildet sein. Beispielsweise können die Federelemente gerade oder auf ihren Einsatzdurchmesser vorgebogen sein. Die Beaufschlagung der Federelemente kann radial oder zu einer radialen Fläche winkelversetzt sein. Die in den einzelnen Federeinrichtungen vorgesehenen Schraubendruckfedern können beispielsweise bezüglich ihrer Länge, ihrem Außendurchmesser, ihres Drahtdurchmessers, ihrer Windungssteigung und/oder Anzahl der Windungen unterschiedlich ausgebildet sein.

Gemäß einer vorteilhaften Ausführungsform des Drehschwingungsdämpfers kann bei vorgegebener Struktur, beispielsweise durch Ausbildung der Eingangsteile, der Ausgangsteile und/oder des Zwischenflanschs jeweils als Gleichteile ein Baukastensystem vorgeschlagen werden, wobei eine Abstimmung des Drehschwingungsdämpfers auf entsprechende Anwendungen ausschließlich mittels der Auslegung der Federelemente vorgesehen sein kann.

Der vorgeschlagene hydrodynamische Drehmomentwandler enthält eine zwischen einem Wandlereingangsteil, beispielsweise einem Wandlergehäuse und einem Wandlerausgangsteil, beispielsweise einer mit einer Getriebeeingangswelle eines Getriebes drehschlüssig verbundenen Nabe, angeordnete Wandlerüberbrückungskupplung, ein bevorzugt mit dem Wandlergehäuse verbundenes oder in dieses integriertes Pumpenrad und ein vom Pumpenrad mittels eines Wandlerfluids angetriebenes Turbinenrad sowie gegebenenfalls ein Leitrad. In das Wandlergehäuse ist der vorgeschlagene Drehschwingungsdämpfer integriert. Die Wandlerüberbrückungskupplung kann aus einer an dem Wandlergehäuse angeordneten Reibfläche und einer an einem druckverlagerbaren Kolben angeordneten komplementären Reibfläche ausgebildet sein. Hierbei überträgt der Kolben bei geschlossener Reibungskupplung das an dem Wandlergehäuse anstehende Drehmoment unter Zwischenschaltung des Drehschwingungsdämpfers auf das Wandlerausgangsteil. Alternativ kann die Wandlerüberbrückungskupplung als Lamellenkupplung ausgebildet sein, wobei ein eingangsseitiger Lamellenträger mit dem Wandlergehäuse und ein ausgangsseitiger Lamellenträger mit dem Drehschwingungsdämpfer verbunden sind.

Gemäß einer vorteilhaften Ausführungsform des Drehmomentwandlers können das Eingangsteil des Drehschwingungsdämpfers mit der Wandlerüberbrückungskupplung, beispielsweise dem Ausgangsteil der Wandlerüberbrückungskupplung, das Ausgangsteil des Drehschwingungsdämpfers mit dem Wandlerausgangsteil und der Zwischenflansch mit dem Turbinenrad verbunden sein. Das Eingangsteil der Wandlerüberbrückungskupplung kann beispielsweise mit dem Wandlergehäuse verbunden sein.

Gemäß einer vorteilhaften Ausführungsform des Drehmomentwandlers können das Eingangsteil des Drehschwingungsdämpfers mit der Wandlerüberbrückungskupplung und das Ausgangsteil des Drehschwingungsdämpfers und das Turbinenrad mit dem Wandlerausgangsteil verbunden sein.

Gemäß einer vorteilhaften Ausführungsform des Drehmomentwandlers kann an dem Eingangsteil, Ausgangsteil und/oder an dem Zwischenflansch zumindest ein Drehschwingungstilger angeordnet sein. Der zumindest eine Drehschwingungstilger kann als Fliehkraftpendel mit einem Pendelmassenträger und Pendelmassen ausgebildet sein, wobei die Pendelmassen an dem Pendelmassenträger entlang von Pendelbahnen im Fliehkraftfeld des um die Drehachse drehenden Drehschwingungsdämpfers oder Drehmomentwandlers mittels Pendellagern pendelfähig aufgenommen sind. Beispielsweise kann das Fliehkraftpendel einen Pendelmassenträger aufweisen, der einteilig aus zumindest einem Bauteil des Drehschwingungsdämpfers gebildet ist. Beispielsweise kann ein als Pendelflansch ausgebildetes Scheibenteil des Drehschwingungsdämpfers beidseitig Pendelmassen aufweisen. Alternativ können zwei axial beabstandete Scheibenteile des Drehschwingungsdämpfers den Pendelmassenträger bilden, wobei die Pendelmassen zwischen diesen mittels Pendellagern aufgenommen sind.

Der zumindest eine Drehschwingungstilger, insbesondere Fliehkraftpendel ist auf eine oder gegebenenfalls auf mehrere Schwingungsordnungen abgestimmt. Hierbei kann eine Schwingungsordnung auf die Schwingungsordnung einer Brennkraftmaschine im Betrieb mit voller Zylinderzahl und eine zweite Schwingungsordnung auf die Schwingungsordnung der Brennkraftmaschine bei einem Betrieb mit einem Teil der Zylinder abgestimmt sein.

Gemäß einer vorteilhaften Ausführungsform des Drehschwingungsdämpfers oder des Drehmomentwandlers kann an dem Eingangsteil, Ausgangsteil und/oder Zwischenflansch zumindest ein Zusatzmassenelement angeordnet sein.

Die Erfindung wird anhand der in den Figuren 1 bis 7 dargestellten Ausführungsbeispiele näher erläutert. Dabei zeigen:
- Figur 1: einen Drehmomentwandler mit Drehschwingungsdämpfer in schematischer Darstellung,
- Figur 2: den oberen Teil des Drehmomentwandlers der Figur 1 in konstruktiver Ausführung in Schnittdarstellung,
- Figur 3: den Drehschwingungsdämpfer der Figur 2 in Ansicht,
- Figur 4: einen gegenüber dem Drehmomentwandler der Figuren 1 bis 3 abgewandelten Drehmomentwandler in schematischer Darstellung,
- Figur 5: den oberen Teil des konstruktiv ausgestalteten Drehmomentwandlers der Figur 4 in Schnittdarstellung,
- Figur 6: einen gegenüber den Drehmomentwandlern der Figuren 1 bis 5 abgewandelten Drehmomentwandler in schematischer Darstellung
und
- Figur 7: den oberen Teil des konstruktiv ausgestalteten Drehmomentwandlers der Figur 6 in Schnittdarstellung.

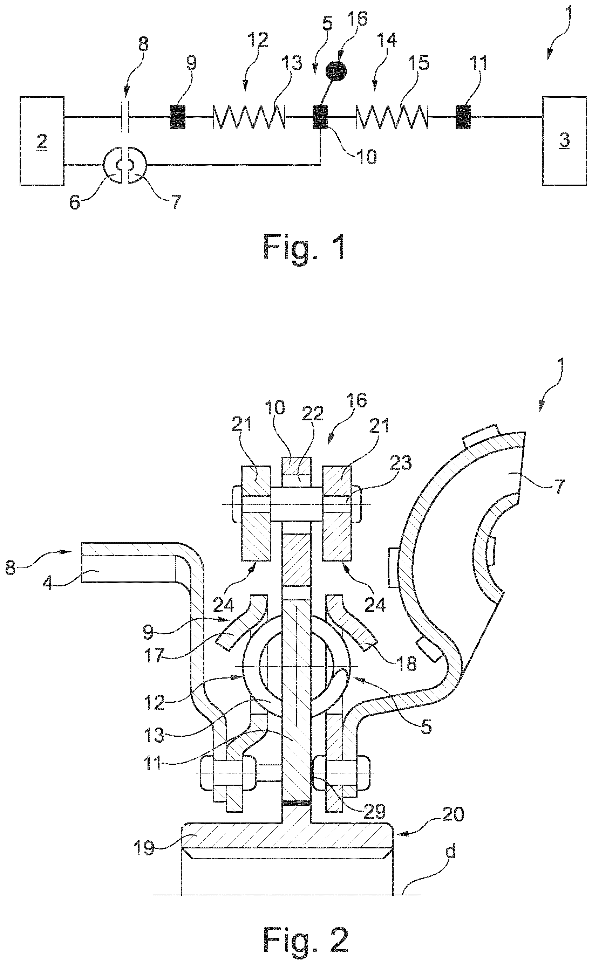

Die Figur 1 zeigt den in einen Antriebsstrang mit der Brennkraftmaschine 2 und dem Getriebe 3 integrierten hydrodynamischen Drehmomentwandler 1, von dem lediglich der Drehschwingungsdämpfer 5, das Pumpenrad 6, das Turbinenrad 7 und die Wandlerüberbrückungskupplung 8 dargestellt sind.

Der Drehschwingungsdämpfer 5 enthält das Eingangsteil 9, den Zwischenflansch 10 und das Ausgangsteil 11. Zwischen dem Eingangsteil 9 und dem Zwischenflansch 10 ist die erste Federeinrichtung 12 mit den ersten Federelementen 13, beispielsweise Schraubendruckfedern, angeordnet. Zwischen dem Zwischenflansch 10 und dem Ausgangsteil 11 ist die zweite Federeinrichtung 14 mit den zweiten Federelementen 15 angeordnet. Das Verhältnis der Federelemente 13 mit der Steifigkeit C1, der Federkraft F1 und dem von dem Wirkradius und der Federkraft F1 abhängigen Federmoment M1 zu den Federelementen 15 mit der Steifigkeit C2, der Federkraft F2 und dem von dem Wirkradius und der Federkraft F2 abhängigen Federmoment M2 verhält sich wie folgt:
0,5 < C1/C2 < 2 ; vorzugsweise 0,8 < C1/C2 < 1,6 ; insbesondere 0,9 <C1/C2 < 1,2;
0,5 < F1/F2 < 2 ; vorzugsweise 0,8 < C1/C2 < 1,2 ; insbesondere 0,9 <C1/C2 < 1,1;
0,5 < M1/M2 < 2 ; vorzugsweise 0,8 < M1/M2 < 1,2 ; insbesondere 0,9 <M1/M2 < 1,1.

Auf diese Weise lassen sich unabhängig von der identischen oder unterschiedlichen Ausbildung der Federelemente 13, 15 mit unterschiedlichen Abmessungen, Drahtstärke, Windungszahl, Windungssteigung, Materialeigenschaften oder dergleichen im Wesentlichen bezogen auf deren Verhalten ähnliche Federeinrichtungen 12, 14 erzielen, so dass ein einstufiges oder in geringem Maße zweistufiges Verhalten des Drehschwingungsdämpfers 5 über den Verdrehwinkel von Eingangsteil 9 und Ausgangsteil 11 erzielt werden kann.

In dem gezeigten Ausführungsbeispiel ist das Eingangsteil 9 des Drehschwingungsdämpfers 5 mit der Wandlerüberbrückungskupplung 8, der Zwischenflansch 10 mit dem Turbinenrad 7 und das Ausgangsteil 11 mit der Getriebeeingangswelle des Getriebes 3 verschaltet. Bei geöffneter Wandlerüberbrückungskupplung 8 wird das Drehmoment der Brennkraftmaschine 2 über den Drehmomentwandler 1, das heißt über das Pumpenrad 6 und das Turbinenrad 7 auf den Zwischenflansch 10 und von dort über die zweite Federeinrichtung 14 auf das Ausgangsteil 11, das zugleich als Wandlerausgangsteil des Drehmomentwandlers 1 dient, übertragen.

An dem Zwischenflansch 10 ist das Fliehkraftpendel 16 angeordnet.

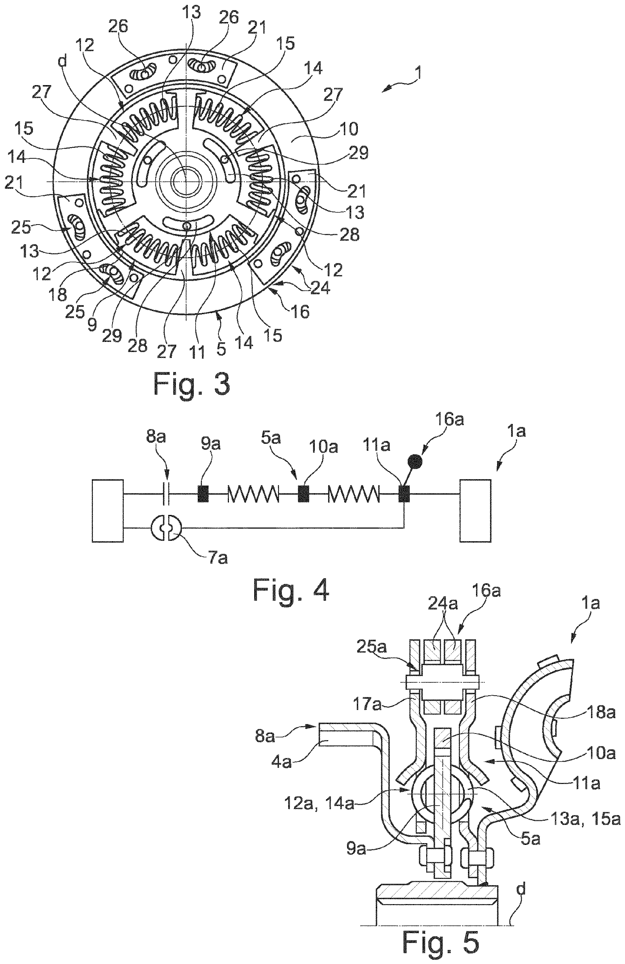

Die Figuren 2 und 3 zeigen in der Zusammenschau den oberen Teil des um die Drehachse d angeordneten, konstruktiv ausgearbeiteten Drehmomentwandlers 1 im Schnitt (Figur 2) und eine Ansicht des Drehmomentwandlers 1 der Figur 2 bei abgenommenem Seitenteil 17 des Eingangsteils 9 des Drehschwingungsdämpfers 5 (Figur 3).

Das Eingangsteil 9 des Drehschwingungsdämpfers 5 ist aus den beiden miteinander axial beabstandet verbundenen Seitenteilen 17, 18 gebildet. Jeweils ein Seitenteil 17, 18 ist mit dem ausgangsseitigen Lamellenträger 4 der als Lamellenkupplung ausgebildeten Wandlerüberbrückungskupplung 8 und mit dem Turbinenrad 7 verbunden - wie hier gezeigt vernietet.

Das Ausgangsteil 11 ist fest beziehungsweise drehschlüssig mit der Nabe 19, die als Wandlerausgangsteil 20 des Drehmomentwandlers 1 dient und mit einer nicht dargestellten Getriebeeingangswelle drehschlüssig verbunden ist, verbunden, beispielsweise verschweißt.

Axial auf derselben Höhe und radial außerhalb des Ausgangsteils 11 ist der ringförmige Zwischenflansch 10 angeordnet. Der Zwischenflansch 10 nimmt das Fliehkraftpendel 16 auf, wobei der Zwischenflansch 10 als Pendelmassenträger dient und beidseitig die über den Umfang verteilt angeordneten Pendelmassenteile 21 aufnimmt. Dabei bilden jeweils axial gegenüberliegende Pendelmassenteile 21 mittels der die Ausnehmungen 22 des Zwischenflanschs 10 durchgreifender Abstandsbolzen 23 eine Pendelmasse 24. Die Pendelmassen 24 sind mittels jeweils zweier in Umfangsrichtung beabstandeter Pendellager 25, die durch Ausnehmungen mit Laufbahnen in dem Zwischenflansch 10 und in den Pendelmassenteilen 21 gebildet sind, wobei auf den Laufbahnen jeweils eine Pendelrolle 26 abwälzt, gebildet. Durch entsprechende Ausbildung der Laufbahnen werden die Pendelbahnen der Pendelmassen 24 gegenüber dem Zwischenflansch 10 vorgegeben.

Die Federelemente 13 der ersten Federeinrichtung 12 werden von den Seitenteilen 17, 18 und den nach innen erweiterten Nasen 27 des Zwischenflanschs 10 beaufschlagt. Die Federelemente 15 werden von dem Ausgangsteil 11 und den Nasen 27 beaufschlagt. Die Seitenteile 17, 18 sind mittels der in den Langlöchern 28 geführten Abstandsbolzen 29 miteinander verbunden.

Die Figur 4 zeigt den gegenüber dem Drehmomentwandler 1 der Figur 1 abgeänderten Drehmomentwandler 1a in derselben schematischen Darstellung. Im Unterschied zu dem Drehmomentwandler 1 ist der Drehschwingungsdämpfer 5a des Drehmomentwandlers 1a unterschiedlich geschaltet. Das Turbinenrad 7a ist hierbei mit dem Ausgangsteil 11a des Drehschwingungsdämpfers 5a verbunden. Das Eingangsteil 9a ist mit der Wandlerüberbrückungskupplung 8a verbunden. Der Zwischenflansch 10a ist schwimmend angeordnet. Das Fliehkraftpendel 16a ist dem Ausgangsteil 11a zugeordnet.

Die Figur 5 zeigt den oberen Teil einer konstruktiven Ausbildung des um die Drehachse d angeordneten Drehmomentwandlers 1a der Figur 4 in Schnittdarstellung. Das Eingangsteil 9a des Drehschwingungsdämpfers 5a ist flanschartig ausgebildet und radial innen mit dem Lamellenträger 4a der Wandlerüberbrückungskupplung 8a verbunden wie vernietet. Das Ausgangsteil 11a ist aus den beiden axial beabstandet miteinander verbundenen wie beispielsweise mittels Abstandsbolzen vernieteten Seitenteilen 17a, 18a gebildet. Hierbei bilden die beiden Seitenteile 17a, 18a den Pendelmassenträger des Fliehkraftpendels 16a, dessen Pendelmassen 24a mittels der Pendellager 25a axial zwischen den Seitenteilen 17a, 18a aufgenommen sind.

Der Zwischenflansch 10a ist radial außerhalb des Eingangsteils 9a schwimmend angeordnet und beaufschlagt alle Federelemente 13a, 15a der Federeinrichtungen 12a, 14a, während das Eingangsteil 9a lediglich die Federelemente 13a und das Ausgangsteil 11a lediglich die Federelemente 15a beaufschlagt.

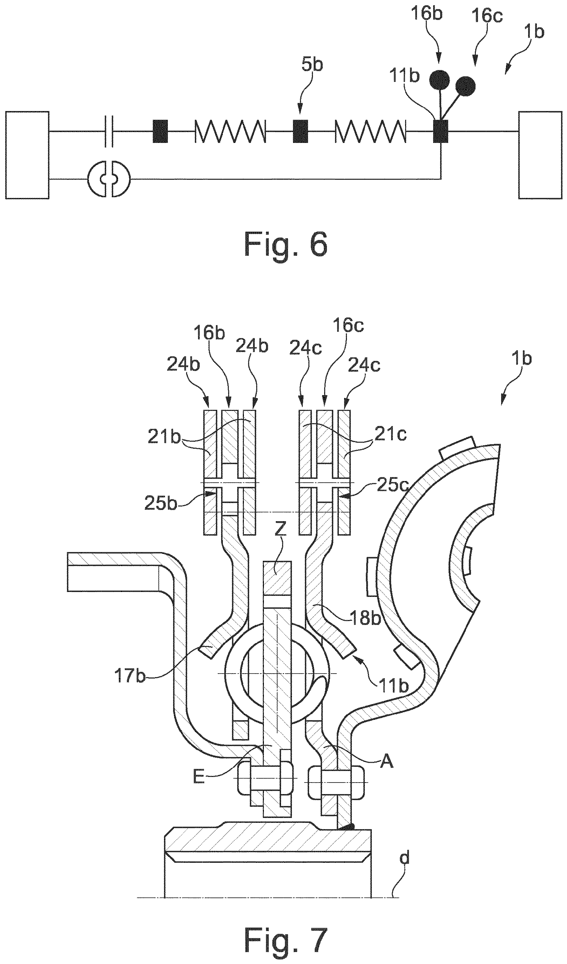

Die Figur 6 zeigt den gegenüber dem Drehmomentwandler 1 a der Figur 4 leicht abgeänderten Drehmomentwandler 1 b in derselben schematischen Darstellung. Im Unterschied zu dem Drehmomentwandler 1 a sind an dem Ausgangsteil 11 b des Drehschwingungsdämpfers 5b des Drehmomentwandlers 1 b zwei Fliehkraftpendel 16b, 16c angeordnet.

Die Figur 7 zeigt den oberen Teil einer konstruktiven Ausbildung des um die Drehachse d angeordneten Drehmomentwandlers 1 b der Figur 6 in Schnittdarstellung. Das Ausgangsteil 11 b ist aus den beiden axial beabstandet miteinander verbundenen wie beispielsweise mittels Abstandsbolzen vernieteten Seitenteilen 17b, 18b gebildet. Hierbei bilden die beiden Seitenteile 17b, 18b jeweils einen Pendelmassenträger der Fliehkraftpendel 16b, 16c. Die Pendelmassen 24b, 24c sind entsprechend den Pendelmassen 24 der Figur 2 aus den Pendelmassenteilen 21 b, 21 c gebildet und mittels der Pendellager 25b, 25c an den Seitenteilen 17b, 18b pendelfähig aufgenommen. Je nach Ausführung können die Fliehkraftpendel 16b, 16c auf dieselbe oder unterschiedliche Schwingungsordnung ausgelegt sein.

### Bezugszeichenliste

- 1: Drehmomentwandler
- 1a: Drehmomentwandler
- 1b: Drehmomentwandler
- 2: Brennkraftmaschine
- 3: Getriebe
- 4: Lamellenträger
- 4a: Lamellenträger
- 5: Drehschwingungsdämpfer
- 5a: Drehschwingungsdämpfer
- 5b: Drehschwingungsdämpfer
- 6: Pumpenrad
- 7: Turbinenrad
- 7a: Turbinenrad
- 8: Wandlerüberbrückungskupplung
- 8a: Wandlerüberbrückungskupplung
- 9: Eingangsteil
- 9a: Eingangsteil
- 10: Zwischenflansch
- 10a: Zwischenflansch
- 11: Ausgangsteil
- 11a: Ausgangsteil
- 11b: Ausgangsteil
- 12: Federeinrichtung
- 12a: Federeinrichtung
- 13: Federelement
- 13a: Federelement
- 14: Federeinrichtung
- 14a: Federeinrichtung
- 15: Federelement
- 15a: Federelement
- 16: Fliehkraftpendel
- 16a: Fliehkraftpendel
- 16b: Fliehkraftpendel
- 16c: Fliehkraftpendel
- 17: Seitenteil
- 17a: Seitenteil
- 17b: Seitenteil
- 18: Seitenteil
- 18a: Seitenteil
- 18b: Seitenteil
- 19: Nabe
- 20: Wandlerausgangsteil
- 21: Pendelmassenteil
- 21b: Pendelmassenteil
- 21c: Pendelmassenteil
- 22: Ausnehmung
- 23: Abstandsbolzen
- 24: Pendelmasse
- 24a: Pendelmasse
- 24b: Pendelmasse
- 24c: Pendelmasse
- 25: Pendellager
- 25a: Pendellager
- 25b: Pendellager
- 25c: Pendellager
- 26: Pendelrolle
- 27: Nase
- 28: Langloch
- 29: Abstandsbolzen
- d: Drehachse

## Patentansprüche

1. Drehschwingungsdämpfer (5, 5a, 5b), insbesondere für einen hydrodynamischen Drehmomentwandler (1, 1a, 1 b), mit um eine Drehachse (d) verdrehbar und relativ gegeneinander um die Drehachse (d) verdrehbaren Dämpferteilen, nämlich einem Eingangsteil (9, 9a), einem Ausgangsteil (11, 11 a, 11 b) und einem im Drehmomentfluss zwischen diesen wirksam angeordneten Zwischenflansch (10, 10a), wobei zwischen Eingangsteil (9, 9a) und Zwischenflansch (10, 10a) eine erste Federeinrichtung (12, 12a) und zwischen Zwischenflansch (10, 10a) und Ausgangsteil (11, 11 a, 11 b) eine zweite Federeinrichtung (14) mit im Wesentlichen auf demselben Wirkradius angeordneten ersten und zweiten Federelementen (13, 13a, 15, 15a) vorgesehen ist, **dadurch gekennzeichnet, dass** ein Verhältnis der Steifigkeiten und/oder der Federkräfte und/oder von von einem Wirkradius und den Federkräften der Federelemente (13, 13a, 15, 15a) abhängigen Federmomenten der ersten Federelemente (13, 13a) zu den zweiten Federelementen (15, 15a) in einem vorgegebenen Bereich um 1 vorgesehen ist.

2. Drehschwingungsdämpfer (5, 5a, 5b) nach Anspruch 1, **dadurch gekennzeichnet, dass** der Bereich zwischen 0,5 und 2,0, bevorzugt zwischen 0,8 und 1,6 und besonders bevorzugt zwischen 0,9 und 1,1 vorgesehen ist.

3. Drehschwingungsdämpfer (5, 5a, 5b) nach Anspruch 1 oder 2, **dadurch gekennzeichnet, dass** bei vorgegebener Struktur eine Abstimmung des Drehschwingungsdämpfers (5, 5a) ausschließlich mittels der Auslegung der Federelemente (13, 13a, 15, 15a) vorgesehen ist.

4. Hydrodynamischer Drehmomentwandler (1, 1a, 1 b) zumindest enthaltend den Drehschwingungsdämpfer (5, 5a, 5b) gemäß der Ansprüche 1 bis 3, eine zwischen einem Wandlereingangsteil und einem Wandlerausgangsteil (20) angeordnete Wandlerüberbrückungskupplung (8, 8a), ein Pumpenrad (6) und ein Turbinenrad (7, 7a).

5. Hydrodynamischer Drehmomentwandler (1) nach Anspruch 4, **dadurch gekennzeichnet, dass** das Eingangsteil (9) des Drehschwingungsdämpfers (5) mit der Wandlerüberbrückungskupplung (8), das Ausgangsteil (11) des Drehschwingungsdämpfers (5) mit dem Wandlerausgangsteil und der Zwischenflansch (10) mit dem Turbinenrad (7) verbunden sind.

6. Hydrodynamischer Drehmomentwandler (1a, 1b) nach Anspruch 4, **dadurch gekennzeichnet, dass** das Eingangsteil (9a) des Drehschwingungsdämpfers (5a, 5b) mit der Wandlerüberbrückungskupplung (8a) und das Ausgangsteil (11a, 11b) des Drehschwingungsdämpfers (5a, 5b) und das Turbinenrad (7a) mit dem Wandlerausgangsteil verbunden sind.

7. Hydrodynamischer Drehmomentwandler (1, 1a, 1 b) nach einem der Ansprüche 4 bis 6, **dadurch gekennzeichnet, dass** an dem Eingangsteil, Ausgangsteil (11, 11a) und/oder Zwischenflansch (10) zumindest ein Drehschwingungstilger angeordnet ist.

8. Hydrodynamischer Drehmomentwandler (1, 1a, 1 b) nach Anspruch 7, **dadurch gekennzeichnet, dass** zumindest ein Drehschwingungstilger als Fliehkraftpendel (16, 16a, 16b, 16c) ausgebildet ist.

9. Hydrodynamischer Drehmomentwandler (1, 1 a, 1 b) nach Anspruch 7 oder 8, **dadurch gekennzeichnet, dass** der zumindest eine Drehschwingungstilger auf eine oder mehrere Schwingungsordnungen abgestimmt ist.

10. Hydrodynamischer Drehmomentwandler nach einem der Ansprüche 4 bis 9, **dadurch gekennzeichnet, dass** an dem Eingangsteil, Ausgangsteil und/oder Zwischenflansch zumindest ein Zusatzmassenelement angeordnet ist.
